# EUROPÄISCHE PATENTSCHRIFT

(11) **EP 1 071 548 B1**
(45) Veröffentlichungstag und Bekanntmachung des Hinweises auf die Patenterteilung: **12.06.2002**
(21) Anmeldenummer: 99915507.0
(22) Anmeldetag: 01.03.1999
(51) Int. Cl.: B26D 9/00

(54) **VERFAHREN UND VORRICHTUNG ZUM SCHNEIDEN VON AUS EINEM TRÄGERFILM UND EINER AUF DIESEM BEFINDLICHEN DEKORSCHICHT BESTEHENDEN FOLIEN, INSBESONDERE PRÄGEFOLIEN**
METHOD AND DEVICE FOR CUTTING SHEETS COMPRISED OF A CARRIER FILM AND A DECORATIVE LAYER LOCATED THEREON, ESPECIALLY EMBOSSED SHEETS
PROCEDE ET DISPOSITIF POUR LE DECOUPAGE DE FEUILLES CONSTITUEES PAR UN FILM SUPPORT PRESENTANT UNE COUCHE DE DECORATION, EN PARTICULIER DE FEUILLES GRAINEES

(30) Priorität: 16.04.1998 DE 19816793
(43) Veröffentlichungstag der Anmeldung: 31.01.2001
(73) Patentinhaber: LEONHARD KURZ GMBH & CO., 90763 Fürth (DE)
(72) Erfinder: HOPFENSITZ, Ralph, D-90592 Schwarzenbruck (DE); LUTZ, Norbert, D-90607 Rückersdorf (DE)
(74) Vertreter: Pöhlau, Claus, Dipl.-Phys.
(86) Internationale Anmeldenummer: DE9900606
(87) Internationale Veröffentlichungsnummer: WO9954100

(56) Entgegenhaltungen:
- US-A- 5 684 642
- PATENT ABSTRACTS OF JAPAN vol. 11, no. 2 (P-532), 6. Januar 1987 & JP 61 180932 A (SONY CORP), 13. August 1986
- PATENT ABSTRACTS OF JAPAN vol. 17, no. 691 (E-1479), 17. Dezember 1993 & JP 05 235503 A (MASTSUSHITA EL. WORKS LTD), 10. September 1993

## Beschreibung

Die Erfindung betrifft ein Verfahren zum Schneiden von aus einem Trägerfilm und einer auf diesem befindlichen, wenigstens eine Lackschicht umfassenden Dekorschicht bestehenden Folien, insbesondere Prägefolien und vorzugsweise Heissprägefolien, sowie eine zur Durchführung eines derartigen Schneidverfahrens geeignete Vorrichtung mit einem einen Abtrag-Laserstrahl erzeugenden Laser und einem Schneidmesser, wobei auf das zu schneidende Substrat sowohl der Laserstrahl als auch das Schneidmesser in Schneidrichtung in Abstand voneinander einwirken.

Prägefolien, insbesondere Heissprägefolien, werden normalerweise in vergleichsweise grossen Breiten hergestellt und dann zum Konfektionieren in Streifen entsprechend geringer Breite in Längsrichtung zerschnitten. Um Prägefolien, insbesondere Heissprägefolien, in Laufrichtung zu schneiden, werden üblicherweise Messerklingen und Rundmesser eingesetzt, da diese kostengünstig und einfach zu handhaben sind. Die Klinge bzw. das Messer zertrennen beim Schneiden die Prägefolie, wobei man Schnittkanten erhält, die nur geringfügig von einer geraden Linie abweichen. Allerdings ist festzustellen, dass die auf dem Trägerfilm vorhandene Dekorschicht beim Trennvorgang teilweise abplatzt, wodurch die Dekorschicht im Bereich der Schnittkante zum einen ausfranst. Zum anderen kann das abgeplatzte Material, das als Schnittstaub bezeichnet wird, die konfektionierte Folie verunreinigen und zu Problemen beim Prägen führen.

Es bestünde zwar die Möglichkeit, zur Reinigung entsprechend verunreinigter Folien Absaugeeinrichtungen oder Walzen mit klebrigen Oberflächen einzusetzen. Zusätzlich wäre es möglich, elektrostatische Entladeeinrichtungen zu verwenden, um die elektrostatische Anziehung von Schnittstaub durch den Trägerfilm bzw. die Prägefolie zu reduzieren. Nachdem jedoch bei der Konfektionierung von Prägefolien, insbesondere Heissprägefolien, mit Verarbeitungsgeschwindigkeiten von 50 m/min und mehr gearbeitet wird und in den Konfektioniermaschinen nur sehr wenig Raum zum Einbau zusätzlicher Einrichtungen zur Verfügung steht, ist eine derartige Vorgehensweise nur sehr bedingt möglich. Ausserdem entfernen derartige Reinigungs- bzw. Zusatzeinrichtungen den Schnittstaub nur teilweise.

Bei der konventionellen Schneidtechnik mit Messern oder Klingen ist weiterhin ein beachtlicher Messerverschleiss zu beobachten, der mit steigender Einsatzdauer zu einer Verschlechterung der Schnittqualität und insbesondere zu einem verstärkten Auftreten von Abplatzungen führt.

Grundsätzlich wäre es möglich, anstelle des mechanischen Trennens mittels Klingen oder Schneidmessern die Unterteilung der entsprechenden Folien mittels Laserstrahlung vorzunehmen, wobei sich grundsätzlich sehr gute Kantenqualitäten erzielen lassen und keine Abplatzungen der im allgemeinen von Lackschichten gebildeten Dekorschicht auftreten. Allerdings wurde festgestellt, dass bei dem Versuch, Heissprägefolien mittels Excimerlaserstrahlung zu schneiden nur Schneidgeschwindigkeiten von etwa 10 m/min erreicht werden können und zudem vergleichsweise hohe Kosten auftreten.

Nd:YAG-Laser können zum Schneiden von Heissprägefolien nur dann eingesetzt werden, wenn ein Trägerfilm verwendet wird, der Laserstrahlung absorbiert. Dies ist bei den üblicherweise für den Trägerfilm verwendeten transparenten Kunststoffen nicht der Fall.

CO₂-Laser werden bisher bereits industriell unter anderem zum Schneiden von Kunststoff-Gardinen und -Segeln eingesetzt. Aufgrund des thermischen Wirkungsprinzips kommt es dabei zu einem - im diesem Fall erwünschten - Verschmelzen der Schnittkanten. Dabei sind hohe Schneidgeschwindigkeiten möglich.

Sämtliche Versuche, Folien aus Trägerfilm und einer Dekorschicht mittels Laser zu schneiden haben gezeigt, dass zum einen unter Umständen toxische Gase und Stäube freigesetzt werden, die entsprechende Absauge- und Filtermassnahmen erfordern. Ausserdem haben Versuche, Heissprägefolien mit
CO₂-Laser zu schneiden, gezeigt, dass an der Schnittkante durch das Aufschmelzen und die anschliessenden Erstarrungsprozesse eine Verdickung auftritt, die beim Aufwickeln der geschnittenen Folie auf einen Kern zu einem Wulst am Rollenrand führt, der nicht akzeptiert werden kann, da er einerseits ein sauberes Wickeln behindert und andererseits möglicherweise bei der Weiterverarbeitung einer Heissprägefolie stört.

Aus der DE 40 23 997 A1 ist bereits ein Verfahren bekannt, bei dem messerschneidfähige Materialien mit einem mechanischen Schneidemesser bis auf eine Restwandstärke bearbeitet werden. Den Restschnitt bewirkt dann ein Laser-Schneidkopf. Bei Anwendung dieses Verfahrens zum Schneiden von Folien, die auf einem Trägerfilm eine möglicherweise abplatzende Dekorschicht aufweisen, müsste - wie bisher - damit gerechnet werden, dass Schnittstaub ensteht, da die Dekorschicht mit einem Messer getrennt würde. Ein Vorgehen gemäss diesem Vorschlag kommt also zum Schneiden entsprechender Folien nicht in Betracht.

Die DE 34 15 015 C2 beschreibt eine Vorrichtung zur Herstellung einer splitterfreien Schnittkante in plattenförmigem Material aus Holz, Kunststoff o.dgl., mit einer Vorritzeinrichtung und einer Aufteilsäge, die beide relativ zum plattenförmigen Material verschiebbar sind. Um ein Absplittern an der Schnittkante des plattenförmigen Materials aus Holz o.dgl. beim Aufteilsägen zu vermeiden, wird dort vorgeschlagen, daß die Vorritzeinrichtung eine Laserquelle zur Erzeugung eines Laserstrahls und eine Einrichtung zur Fokussierung des Laserstrahls auf der

Oberfläche des plattenförmigen Materials umfasst, um wenigstens eine Nut vorbestimmter Breite und Tiefe in das plattenförmige Material einzubrennen. Dabei trifft der Laserstrahl etwas vor der Kante des Sägeblattes auf das plattenförmige Material auf, und die Lasereinschnitte werden normalerweise an der Stelle des plattenförmigen Materials gemacht, wo die Sägezähne der Aufteilsäge heraustreten, wie in Spalte 2, Zeilen 21 bis 24, beschrieben ist. Das Herstellen einer solchen splitterfreien Schnittkante in einem plattenförmigen Material aus Holz, Kunststoff o.dgl. ist mit dem Schneiden von Folien, insbes. Prägefolien, die aus einem Trägerfilm und einer auf diesem befindlichen Dekorschicht, die wenigstens eine Lackschicht umfasst, nicht vergleichbar.

Aus der DE 44 39 220 A1 ist ein Verfahren zum Schneiden von Kunststoff-Folien mittels CO2-Laser bekannt, das sich dadurch auszeichnet, dass gleichzeitig mehrere übereinanderliegende Bahnen einer Folie geschnitten werden können. Um dabei beim Schneiden mittels Laser ein Aufschmelzen und dadurch Verkleben der Schnittränder übereinanderliegender Folienlagen zu vermeiden, werden gemäss dem Stand der Technik Trennschichten, beispielsweise Papierlagen, zwischen die einzelnen, zu schneidenden Folienlagen eingebracht. Eine derartige Vorgehensweise scheidet aus produktionstechnischen und Kostengründen bei der Konfektionierung von Prägefolien, insbesondere Heissprägefolien, aus, da ein derartiges Arbeiten insbesondere eine mehrfache Umwickelung der zu schneidenden bzw. geschnittenen Folie bedingen würde.

Aus der JP 61-180932 A ist es bekannt, Magnetbänder derart zu schneiden, dass zuerst die spröde und abrasive Magnetschicht mittels eines Laserstrahls entlang der Schnittlinie durchtrennt und dann erst mittels Schneidmessern die Trägerfolie durchschnitten wird. Hierdurch werden Risse in der Magnetschicht vermieden und glatte Schnittkanten erzeugt.

Der Erfindung liegt daher die Aufgabe zugrunde, ein Verfahren und eine Vorrichtung zum Schneiden von aus einem Trägerfilm und einer auf diesem befindlichen Dekorschicht bestehenden Folien, insbesondere Prägefolien, vorzugsweise Heissprägefolien, vorzuschlagen, bei dem mit hohen Geschwindigkeiten gearbeitet werden kann, ein sauberer Schnitt ohne Abplatzungen erreicht wird und der Messerverschleiss möglichst gering gehalten werden kann.

Zur Lösung dieser Aufgabe wird bei einem Verfahren der eingangs erwähnten Art vorgeschlagen derart vorzugehen, dass mittels Laserstrahlung zuerst die Dekorschicht entlang der Schnittkante von dem Trägerfilm abgetragen und dann in der so gebildeten Abtragspur der Trägerfilm mittels eines Messers (wobei der Begriff "Messer" auch eine Klinge oder Rollenklinge umfasst) mechanisch durchtrennt wird.

Bei einem Vorgehen gemäss der Erfindung werden die in der Dekorschicht vorhandenen Lack- bzw. Metallisierungsschichten infolge entsprechender Absorption der Energie des Laserstrahls erwärmt. Wenn man nun die Bearbeitungsparameter (Laserleistung, Fleckgrösse, Bewegungsgeschwindigkeit der Folie) entsprechend einstellt, wird in dem Bereich, wo die Laserstrahlung auf die Folie einwirkt, das Material der Dekorschicht im schmelz- bzw. dampfförmigen Zustand abgetragen und hierdurch der Trägerfilm freigelegt. Dabei kann durch eine unmittelbar an der Bearbeitungsstelle wirksame Absaugung sichergestellt werden, dass die zulässigen Grenzwerte für die Schadstoffbelastung am Arbeitsplatz eingehalten werden. In der durch den Abtrag der Dekorschicht freigelegten Abtragspur wird dann mittels eines Messers der Trägerfilm durchtrennt. Diese Vorgehensweise hat den Vorzug, dass, nachdem in der Abtragspur die abplatzende Dekorschicht bereits entfernt ist, beim Schneiden mittels des Messers kein Schneidstaub der störenden Art mehr entsteht. Der Trägerfilm selbst ist im allgemeinen derart beschaffen, dass ein Schneiden nicht zu einer wesentlichen Staubbildung führt. Man erhält somit ohne zusätzliche, aufwendige Reinigungsarbeiten sofort beim Konfektionieren eine in entsprechende Streifen geschnittene Folie, die frei von Schneidstaub ist.

Ein weiterer Vorteil des Verfahrens gemäss der Erfindung ist der, dass, nachdem nur die Dekorschicht mittels Laserstrahlung entfernt werden muss, bereits vergleichsweise geringe Laserleistungen genügen um die Schicht abzutragen. Dies bedeutet, dass entweder kleine, relativ billige Laser verwendet werden können oder eben sehr hohe Schneidgeschwindigkeiten erreichbar sind.

Ein weiterer Vorteil des Einsatzes von Laserstrahlung zum Entfernen der Dekorschicht ist der, dass kein Verschleiss der "Schneideinrichtung", soweit der Abtrag der Dekorschicht betroffen ist, zu erwarten ist. Man erhält deswegen stets die gleichen Verhältnisse, d.h. insbesondere eine gleich breite und gestaltete Laser-Abtragspur, während bisher bei Verwendung von Messern infolge deren Abnutzung hier erhebliche Veränderungen zu beobachten waren.

Schliesslich hat die Vorgehensweise nach der Erfindung auch noch den Vorteil, dass der Messerverschleiss unter Umständen erheblich vermindert werden kann, da das Messer nur noch den Trägerfilm durchtrennen muss, nicht aber die unter Umständen wesentlich härteren und vor allem aus unterschiedlichen Substanzen zusammengesetzte Dekorschicht.

Grundsätzlich wäre es ausreichend, wenn die Breite der durch Laserstrahlung gebildeten Abtragspur der Dicke des den Trägerfilm schneidenden Messers entspricht. Wenn jedoch, wie erfindungsgemäss vorgesehen, eine Abtragspur gebildet wird, deren Breite grösser ist als die Dicke des den Trägerfilm schneidenden Messers, wobei die Abtragspur vorzugsweise eine Breite von 1 bis 2 mm hat, lässt sich zum einen der Vorteil erzielen, dass auf jeden Fall gewährleistet ist, dass das Messer nicht mehr mit der Dekorschicht in Berührung kommt. Zum anderen können auch irgendwelche seitlichen Bewegungen des Messers im Vergleich zu der zu schneidenden Folie auf diese Weise kompensiert werden.

Es ist nach der Erfindung weiter vorgesehen, dass zum Abtragen der Dekorschicht ein Nd:YAG- oder Diodenlaser verwendet wird, wobei in einem derartigen Falle ein Laser mit einer Leistung von 20 bis 50 W eingesetzt werden kann. Der Einsatz eines Nd:YAG- oder Diodenlasers hat vor allem den Vorteil, dass er den üblicherweise transparenten Trägerfilm nicht angreift. Die vergleichsweise dünne Dekorschicht kann mit derartigen Lasern sehr leicht abgetragen werden, so dass bei den üblichen Breiten der Abtragspur von 1 bis 2 mm unter Verwendung derartiger Laser mit Arbeitsgeschwindigkeiten von 70 m/min und mehr gearbeitet werden kann. Ausserdem ist es bei Einsatz von Lasern, die den transparenten Trägerfilm nicht angreifen, auch möglich, den Laser auf der Seite der Folie anzuordnen, auf der die Dekorschicht nicht vorhanden ist. In diesem Falle wird dann die Dekorschicht zum Abtragen durch den Trägerfilm hindurch bestrahlt.

Als besonders günstig hat es sich erwiesen, wenn zum Abtragen der Dekorschicht ein Laser verwendet wird, der eine Intensitätsverteilung der Laserstrahlung quer zur Vorschubrichtung der Folie (gegenüber dem Laser) aufweist, die einem Rechteck-(Tophat-)Profil entspricht. Infolge des raschen Anstiegs und Abfalls der Intensität der Laserstrahlung bei Vorhandensein eines Tophat-Profils wird erreicht, dass Anschmelzungen, d.h. nur die Überführung in den schmelzflüssigen Zustand ohne vollständigen Abtrag, der die Dekorschicht bildenden Materialschichten im Randbereich minimiert werden. Man erhält so eine besonders saubere Kante der Dekorschicht. Wird dagegen mit Laserstrahlung gearbeitet, die ein gaussförmiges Intensitätsprofil quer zur Vorschubrichtung aufweist, treten an den Rändern der Abtragspur geringfügige Aufwerfungen von geschmolzenem Material der Deckschicht auf, was die Qualität der mittels einer entsprechenden Folie erzeugten Dekoration beeinträchtigen und zu einem geringfügigen Wulst am Rollenrand führen kann.

Es ist nach der Erfindung weiter vorgesehen, dass der Trägerfilm anschliessend an das Abtragen der Dekorschicht in einem Abstand von weniger als 70 mm, vorzugsweise weniger als 50 mm, mittels des Messers durchtrennt wird, um auf diese Weise eine möglichst kompakte Vorrichtung bauen zu können, bei der ausserdem im wesentlichen nur eine Bearbeitungsstelle durch das Kontrollpersonal beobachtet werden muss.

Weiterer Gegenstand der Erfindung ist eine Vorrichtung zur Durchführung des vorstehend erläuterten Schneidverfahrens mit einem einen Abtrag-Laserstrahl erzeugenden Laser und einem Schneidmesser, wobei auf das zu schneidende Substrat sowohl der Laserstrahl als auch das Schneidmesser in Schneidrichtung in Abstand voneinander einwirken.

Eine derartige Vorrichtung ist erfindungsgemäss vorteilhafterweise derart ausgebildet, dass der Laser und das Schneidmesser so angeordnet und ausgebildet sind, dass in Bewegungsrichtung der das Substrat bildenden Folie das Schneidmesser anschliessend an den Wirkungsort des Laserstrahls angeordnet ist, wobei der Laserstrahl eine Abtragspur in der Dekorschicht erzeugt, die breiter als die Dicke der auf die Folie wirkenden Schneidkante des Schneidmessers ist.

Bei Verwendung einer derartigen Vorrichtung lässt sich ein einwandfreier, sauberer Trennschnitt für die Folie erreichen, wobei zuverlässig gewährleistet ist, dass auf die Dekorschicht in dem Bereich, wo ein Schnitt erfolgen soll, nur der Laserstrahl einwirkt, so dass kein auf Abplatzungen zurückzuführender Schneidstaub entsteht. Durch das gegenüber der vom Laserstrahl erzeugten Abtragspur dünne Messer kann dann rasch und sauber der Trägerfilm durchtrennt werden.

Wenn, wie erfindungsgemäss weiter vorgesehen, der Laser mit einer Einrichtung zur Ablenkung des Laserstrahls versehen ist, kann sehr rasch eine Lageregelung der Abtragspur erfolgen, indem der Laserstrahl seitlich abgelenkt wird. Dies kann günstig sein, wenn aus irgendwelchen Gründen eine Dejustierung des Messers, beispielsweise weil dieses durch unachtsames Handhaben verbogen wurde, erfolgt ist.

Es ist weiter vorteilhaft, wenn der Laser eine Einrichtung zur Veränderung des Durchmessers des auf die Folie einwirkenden Laserstrahls aufweist, weil dann die Breite der von dem Laserstrahl erzeugten Abtragspur leicht verändert und beispielsweise an die Abnutzung eines Messers angepasst werden kann.

Zweckmässigerweise kann die Laserleistung in Abhängigkeit von der Bewegungsgeschwindigkeit der Folie geregelt werden. Auf diese Weise kann die Bearbeitungsqualität auch beim Anfahren bzw. Abbremsen der Maschine sowie trotz bei Konfektioniermaschinen in der Regel über die Lauflänge variierender Bewegungsgeschwindigkeit konstant gehalten werden.

Zur seitlichen Ablenkung des Laserstrahls können beispielsweise akusto-optische Modulatoren oder Galvanometer-Spiegel verwendet werden. Die Veränderung des Durchmessers des Laserstrahls kann z.B. durch fokusschiebende Komponenten, beispielsweise adaptive Optiken, sehr rasch erfolgen. Um die Überwachung des Schnittes in einfacher Weise zu ermöglichen, ist es günstig, wenn, wie nach der Erfindung weiter vorgeschlagen, der Abstand zwischen den Einwirkungsstellen des Laserstrahls einerseits sowie des Schneidmessers andererseits auf die Folie weniger als 70 mm, vorzugsweise weniger als 50 mm, beträgt.

Schliesslich liegt es im Rahmen der Erfindung, dass der Laserstrahl und das Schneidmesser auf der gleichen Seite der zu schneidenden Folie angeordnet sind, weil hierdurch einerseits die Konstruktion der Schneidvorrichtung vereinfacht werden kann und andererseits auch die Überwachungsmöglichkeiten verbessert werden.

Weitere Merkmale, Einzelheiten und Vorteile der Erfindung ergeben sich aus der folgenden Beschreibung des Verfahrens und einer nur schematisch gezeigten Vorrichtung anhand der Zeichnung.
Es zeigen -:
- Figur 1: schematisch eine Schneidvorrichtung mit den wesentlichen Komponenten;
- Figur 2: eine schematische Ansicht zur Erläuterung des Schneidens einer Heissprägefolie;
- Figur 3: die Intensität der Laserstrahlung bei einem sog. Tophat-Profil sowie die mit einem derartigen Profil erzeugte Abtragspur in einer Dekorschicht,
und
- Figur 4: eine gaussförmige Intensitätsverteilung der Laserstrahlung sowie die mit einem entsprechenden Laser erzeugte Abtragspur der Dekorschicht einer Heissprägefolie.

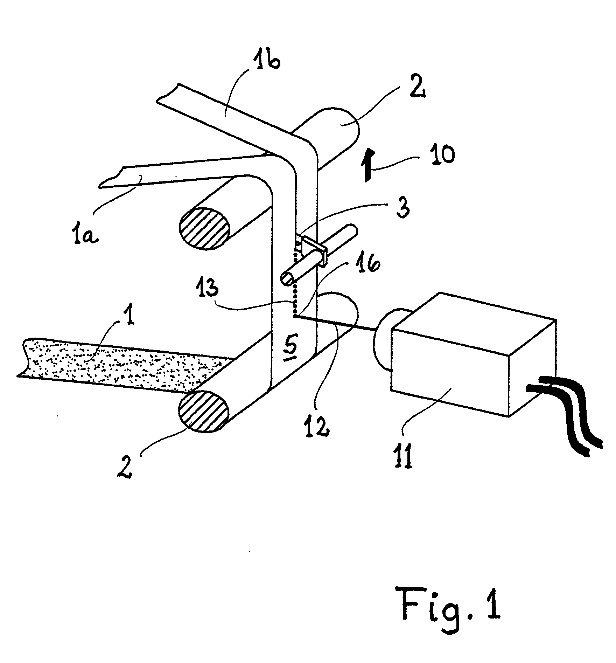

Zur Konfektionierung, beispielsweise von Heissprägefolien, ist es erforderlich, eine Folie 1 (Figur 1) in mehrere, schmälere Bänder 1a, 1b zu unterteilen. Zu diesem Zweck wird die auf einer Vorratsrolle aufgewickelte Folie 1 gemäss Skizze in Figur 1 über zwei Umlenkrollen 2 geführt, wobei zwischen den Umlenkrollen 2 beim Stand der Technik grundsätzlich nur ein Schneidmesser 3 pro Spur vorhanden ist.

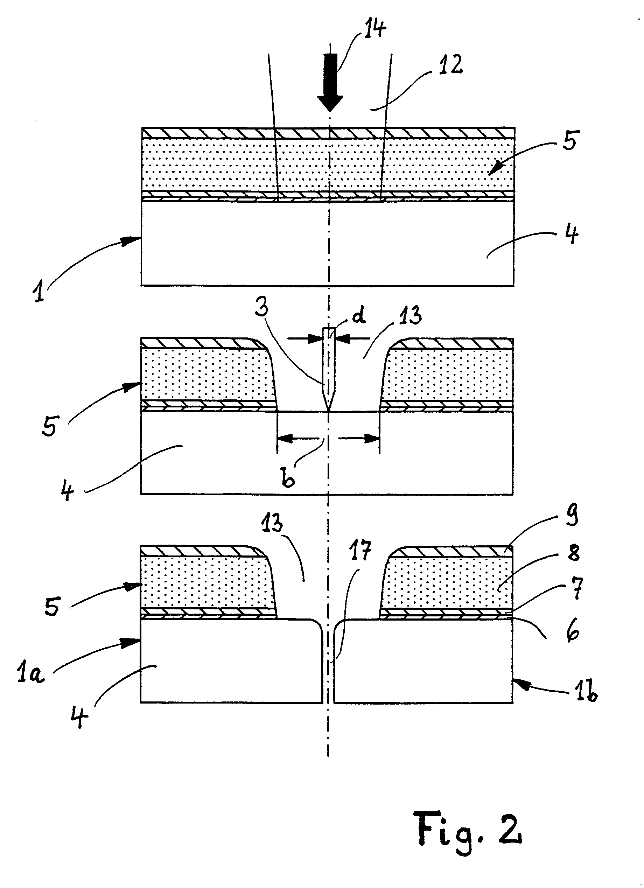

Wie aus den Figuren 2 bis 4 ersichtlich ist, besteht eine Heissprägefolie oder generell Prägefolie, wie sie erfindungsgemäss geschnitten werden soll, aus einem Trägerfilm 4, auf dem eine insgesamt mit 5 bezeichnete Dekorschicht angeordnet ist. Die Dekorschicht 5 ist, abhängig vom jeweiligen Anwendungsgebiet, unterschiedlich aufgebaut. Beispielsweise kann die Dekorschicht 5 - ausgehend von dem Trägerfilm 4 - eine Ablöseschicht 6, beispielsweise eine Wachsschicht, die das leichte Ablösen der Dekorschicht vom Trägerfilm 4 bewirkt, eine Schutzlackschicht 7, eine die eigentliche Dekoration darstellende Farbschicht 8 sowie eine Kleberschicht 9 umfassen, wobei die Kleberschicht 9 dazu dient, die Dekorschicht 5 der Heissprägefolie unter Einwirkung von Wärme und/oder Druck auf einem Substrat entsprechend festzulegen. Die eigentliche Dekorationsschicht 8 ist im allgemeinen von wenigstens einer Lackschicht gebildet. Sie kann aber beispielsweise auch aus mehreren Lackschichten bestehen, wobei auch die Möglichkeit zu berücksichtigen ist, dass Grenzflächen zwischen zwei Lackschichten in der Schichtanordnung 8 räumlich strukuriert sind, z.B. von Beugungs- oder Hologramm-Strukturen gebildet werden. Insbesondere in einem derartigen Fall, aber auch wenn man eine Prägefolie vorliegen hat, die eine Metallfolie nachbilden soll, ist innerhalb der Schichtanordnung 8 auch noch eine Metallschicht vorhanden, bei der es sich z.B. um eine im Vakuum aufgedampfte Aluminiumschicht handeln kann.

Der Aufbau von Prägefolien, insbesondere Heissprägefolien, sowie die Zusammensetzung von deren Dekorschichten ist allgemein bekannt. Es wird hier z.B. hingewiesen auf die DE 44 23 291 A1.

Wie bereits eingangs erwähnt, sind die Dekorationsschichten häufig spröde, so dass sie abplatzen, wenn man versucht, die Folie lediglich mittels eines Messers 3 zu zerschneiden. Die abplatzenden Teile der Dekorschicht 5 bilden dann sogenannten Schnittstaub, der die konfektionierte Folie verunreinigen und zu Problemen bei der Verarbeitung der Folie führen kann.

Um dies zu vermeiden, wird nun gemäss der Erfindung so vorgegangen, dass in Bewegungsrichtung (Pfeil 10 in Figur 1) vor dem eigentlichen Schneidmesser 3 ein Laser 11 angeordnet ist, dessen Strahl 12 in der Dekorschicht 5 der Folie 1 eine Abtragspur 13 erzeugt, in welcher - wie dies in Figur 2 deutlich ersichtlich ist - die Dekorschicht 5 vom Trägerfilm 4 entfernt ist, so dass das Messer 3 nur noch auf den Trägerfilm 4 einwirkt und diesen auseinanderschneidet, wodurch die Entstehung von aus abplatzenden Partikeln der Dekorschicht 5 bestehendem Schneidstaub verhindert wird.

In Figur 2 sind die einzelnen Schritte des Schneidverfahrens gemäss der Erfindung näher erläutert.

In der Darstellung in Figur 2, oben ist angedeutet, dass ein Laserstrahl 12, dessen Umrisse angedeutet sind, in Pfeilrichtung 14 auf die Dekorschicht 5 der Folie 1 auftrifft. Hierdurch wird die Dekorschicht 5 in den entsprechenden Bereichen, sofern die Intensität der Laserstrahlung ausreichend hoch ist, geschmolzen bzw. verdampft und abgetragen, wodurch im Bereich des Laserstrahls 12 der Trägerfilm 4 freigelegt wird.

Die Breite b der durch den Laserstrahl 12 in der Dekorschicht 5 freigelegten Abtragspur 13 ist, wie Figur 2, Mitte erkennen lässt, deutlich grösser als die Dicke d des Messers 3. Im allgemeinen sollte die Breite b der Abtragspur 13 etwa 1 bis 2 mm betragen. Infolge der grösseren Breite b der Abtragspur 13 gegenüber der Dicke d des Messers 3 ist sichergestellt, dass das Messer einwandfrei in der Abtragspur geführt wird. Die eventuell durch Folienverzug, Erschütterungen und Ungenauigkeiten der Konfektioniermaschine auftretenden Positionsschwankungen zwischen Laser und Messerspur bleiben auf diese Weise ohne Einfluss auf die Schnittqualität.

Wie die Figur 1 erkennen lässt, ist das Messer 3 in Bewegungsrichtung 10 der Folie 1 relativ nahe hinter der Einwirkungsstelle 16 des Laserstrahls 12 auf die Dekorschicht 5 angeordnet, wobei der Abstand zwischen dem Auftreffpunkt 16 des Laserstrahls 12 und dem Messer 13 beispielsweise etwa 50 mm betragen kann. Auch dieser Umstand hilft, etwaige Lageschwankungen oder Verzug der zu schneidenden Folie 1 auszugleichen.

Das Messer 3 schneidet dann, wie in Figur 2, unten veranschaulicht, den Trägerfilm 4 in der bisher bekannten Weise durch, um so die zulaufende Folie (Figur 2, oben) in zwei Folienstreifen la und 1b (Figur 2, unten) durch eine Schnittfuge 17 zu trennen.

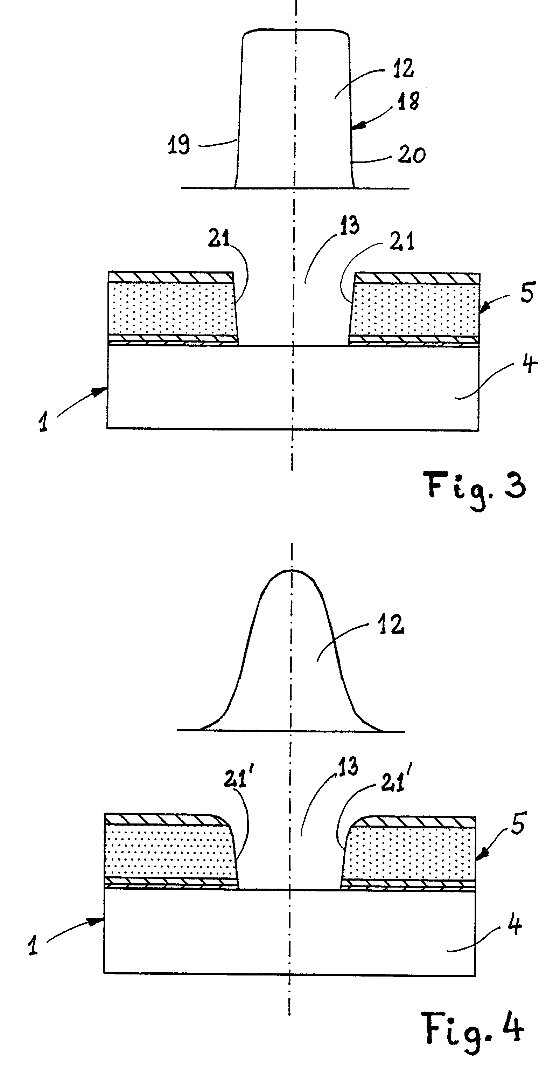

In den Figuren 3 und 4 ist jeweils oben die Intensitätsverteilung der Laserstrahlung quer zu der - im vorliegenden Fall senkrecht zur Papierebene verlaufenden - Vorschubrichtung der Folie 1 gezeigt.

In Figur 3 besitzt die Intensitätskurve 18 verhältnismässig steile Anstiegs- und Abfallflanken 19 bzw. 20. Die Intensitätsverteilung hat in diesem Falle ein sogenanntes Rechteck- oder "Tophat"-Profil. Entsprechend ergeben sich dann auch weitgehend gerade und steile Flanken 21 für die Abtragspur 13 in der Dekorschicht 5.

Demgegenüber weist die Laserstrahlung 12 gemäss der Kurve in Figur 4, oben ein gaussförmiges Intensitätsprofil quer zur Bewegungsrichtung der Folie 1 auf. Dies führt dann dazu, dass die Flanken 21' der Abtragspur 13, wie in Figur 4, unten und auch in Figur 2 veranschaulicht, eine geringere Steigung besitzen und insbesondere eine gewisse Abrundung im Bereich der dem Laserstrahl zugekehrten Seite der Dekorschicht aufweisen. Ein gaussförmiges Intentitätsprofil der Laserstrahlung 12 kann auch dazu führen, dass an den Rändern der Abtragspur 13 sogar Aufwerfungen von geschmolzenem Material zu beobachten sind.

Hinsichtlich der für das Verfahren und die Vorrichtung gemäss der Erfindung einsetzbaren Laser 11 ist darauf hinzuweisen, dass industriell bereits CO₂-, Nd:YAG- und Excimerlaser zum Trennen von Kunststoffen eingesetzt werden. Die Einsatzmöglichkeiten von Hochleistungs-Diodenlasern werden derzeit untersucht.

Betriebsparameter und Einsatzfelder der Laserstrahlquellen zum Trennen von Kunststoffen sind in der folgenden Tabelle beschrieben -:

| **Laser** | **Wellenlänge** | **Betriebsart** | **Einsatz** |
|---|---|---|---|
| CO₂-Laser | 10,6 µm | cw, Puls | Industrie |
| Nd:YAG-Laser | 1,064 µm | cw, Puls | Industrie |
| Excimerlaser | 193, 248, 308 nm | Puls | Industrie |
| Diodenlaser | 650 bis 900 nm | cw, Puls | Labor |

Zweckmässigerweise werden jedoch für die Erfindung insbesondere Nd:YAG- und Diodenlaser verwendet, weil sich mit derartigen Lasern zum einen sehr hohe Arbeitsgeschwindigkeiten erreichen lassen und zum anderen deren Strahlung in dem üblicherweise transparenten Trägerfilm nicht oder nur zu einem geringen Anteil absorbiert wird, so dass eine Schädigung der Trägerfolie vermieden werden kann. Versuche haben gezeigt, dass sich bei konventionell aufgebauten Heissprägefolien mit Polyesterfolien als Trägerfilm bei Verwendung von Nd:YAGoder Diodenlasern Umspulgeschwindigkeiten von 70 m/min und mehr erzielen lassen, wobei hierzu nur Laserleistungen im Bereich von 20 bis 50 W erforderlich sind, und zwar um auf diese Weise eine Abtragspur 13 im Bereich von 1 bis 2 mm Breite zu erzielen. Dabei kann durch strahlablenkende Komponenten, z.B. akusto-optische Modulatoren oder Galvanometer-Spiegel die Laserstrahlung sehr schnell seitlich abgelenkt werden, um auf die Weise eine Lageregelung der Abtragspur 13 zu ermöglichen. Darüberhinaus besteht die Möglichkeit, auch die Breite b der Abtragspur 13 durch fokusschiebende Komponenten, z.B. adaptive Optiken, sehr schnell zu verstellen. Schliesslich kann eine - insbesondere beim Anfahren oder Abbremsen der Folie zu Beginn und Ende eines Schneidvorganges oder beim Herausschneiden von qualitativ schlechten Folienabschnitten auftretende - Veränderung der Bewegungsgeschwindigkeit der Folie gegenüber dem Laserstrahl, die eventuell zu einer unterschiedlichen Abtragspur führen würde, dadurch kompensiert werden, dass die Laserleistung entsprechend verändert wird, wobei bei höherer Bewegungsgeschwindigkeit mit einer entsprechend höheren Leistung gearbeitet wird.

## Patentansprüche

1. Verfahren zum Schneiden von aus einem Trägerfilm und einer auf diesem befindlichen, wenigstens eine Lackschicht umfassenden Dekorschicht bestehenden Folien, insbesondere Prägefolien,
**dadurch gekennzeichnet,**
**dass** mittels Laserstrahlung (12) zuerst die Dekorschicht (5) entlang der Schnittlinie (13) von dem Trägerfilm (4) abgetragen und dann in der so gebildeten Abtragspur (13) der Trägerfilm (4) mittels eines Messers (3) mechanisch durchtrennt wird.

2. Verfahren nach Anspruch 1,
**dadurch gekennzeichnet,**
**dass** eine Abtragspur (13) gebildet wird, deren Breite (b) grösser ist als die Dicke (d) des den Trägerfilm (4) schneidenden Messers (3).

3. Verfahren nach Anspruch 1 oder 2,
**dadurch gekennzeichnet,**
**dass** eine Abtragspur (13) von 1 bis 2 mm Breite gebildet wird.

4. Verfahren nach einem der vorhergehenden Ansprüche,
**dadurch gekennzeichnet,**
**dass** ein Nd:YAG- oder Diodenlaser (11) zum Abtragen der Dekorschicht (5) verwendet wird.

5. Verfahren nach Anspruch 4,
**dadurch gekennzeichnet,**
**dass** ein Laser (11) mit einer Leistung von 20 bis 50 W verwendet wird.

6. Verfahren nach einem der vorhergehenden Ansprüche,
**dadurch gekennzeichnet ,**
**dass** ein Laser (11) verwendet wird, der eine Intensitätsverteilung der Laserstrahlung (12) quer zur Vorschubrichtung der Folie gegenüber dem Laserstrahl (12) aufweist, die einem Rechteck-Profil (Figur 3) entspricht.

7. Verfahren nach einem der vorhergehenden Ansprüche,
**dadurch gekennzeichnet,**
**dass** der Trägerfilm (4) anschliessend an das Abtragen der Dekorschicht (5) in einem Abstand von weniger als 70 mm, vorzugsweise weniger als 50 mm, mittels des Messers (3) durchtrennt wird.

8. Verfahren nach einem der vorhergehenden Ansprüche,
**dadurch gekennzeichnet,**
**dass** mit Schnittgeschwindigkeiten von wenigstens 40 m/min, vorzugsweise von wenigstens 70 m/min gearbeitet wird.

9. Vorrichtung zur Durchführung des Schneidverfahrens nach einem der vorhergehenden Ansprüche mit einem einen Abtrag-Laserstrahl (12) erzeugenden Laser (11) und einem Schneidmeser (3), wobei auf das zu schneidende Substrat (4, 5) sowohl der Laserstrahl (12) als auch das Schneidmesser (3) in Schneidrichtung in Abstand voneinander einwirken und der Laser (11) und das Schneidmesser (3) so angeordnet sind, dass in Bewegungsrichtung (10) der das Substrat bildenden Folie (1) das Schneidmesser (3) anschliessend an den Wirkungsort (16) des Laserstrahls (12) angeordnet ist,
**dadurch gekennzeichnet,**
**dass** der Laser (11) und das Schneidmesser (3) so ausgebildet sind, dass der Laserstrahl (12) eine Abtragspur (13) in der Dekorschicht (5) erzeugt, die breiter als die Dicke (d) der auf die Folie (1) wirkenden Schneidkante des Schneidmessers (3) ist.

10. Vorrichtung nach Anspruch 9,
**dadurch gekennzeichnet ,**
**dass** der Laser (11) mit einer Einrichtung zur Ablenkung des Laserstrahls (12) versehen ist.

11. Vorrichtung nach Anspruch 9 oder 10,
**dadurch gekennzeichnet,**
**dass** der Laser (11) eine Einrichtung zur Veränderung des Durchmessers des auf die Folie (1) einwirkenden Laserstrahls (12) aufweist.

12. Vorrichtung nach einem der Ansprüche 9 bis 11,
**dadurch gekennzeichnet,**
**dass** die Leistung des Lasers (11) in Abhängigkeit von der Bewegungsgeschwindigkeit der Folie (1) regelbar ist.

13. Vorrichtung nach einem der Ansprüche 9 bis 12,
**dadurch gekennzeichnet ,**
**dass** der Abstand zwischen den Einwirkungsstellen (16) des Laserstrahls (12) einerseits sowie des Schneidmessers (3) andererseits auf die Folie (1) weniger als 70 mm, vorzugsweise weniger als 50 mm, beträgt.

14. Vorrichtung nach einem der Ansprüche 9 bis 13,
**dadurch gekennzeichnet,**
**dass** der Laserstrahl (12) und das Schneidmesser (3) auf der gleichen Seite der zu schneidenden Folie (1) angeordnet sind.

## Claims

1. Method for cutting sheets comprised of a carrier film and of a decorative layer which is located thereon and has at least one lacquer layer, especially embossed sheets, **characterized in that** first the decorative layer (5) is removed from the carrier film (4) along the cutting line (13) by means of laser radiation (12), and then, in the removal track (13) thus formed, the carrier film (4) is cut through mechanically by means of a knife (3).

2. Method according to Claim 1, **characterized in that** a removal track (13) is formed whose width (b) is greater than the thickness (d) of the knife (3) cutting the carrier film (4).

3. Method according to Claim 1 or 2, **characterized in that** a removal track (13) of 1 to 2 mm in width is formed.

4. Method according to one of the preceding claims, **characterized in that** an Nd:YAG or diode laser (11) is used to remove the decorative layer (5).

5. Method according to Claim 4, **characterized in that** a laser (11) with a power of 20 to 50 W is used.

6. Method according to one of the preceding claims, **characterized in that** a laser (11) is used which has an intensity distribution of the laser radiation (12), transverse to the direction of advance of the sheet in relation to the laser beam (12), corresponding to a rectangular profile (Figure 3).

7. Method according to one of the preceding claims, **characterized in that**, following removal of the decorative layer (5), the carrier film (4) is cut through by means of the knife (3) at a distance of less than 70 mm, preferably less than 50 mm.

8. Method according to one of the preceding claims, **characterized in that** the operation is performed with cutting speeds of at least 40 m/min, preferably of at least 70 m/min.

9. Device for carrying out the cutting method according to one of the preceding claims, with a laser (11) generating a removing laser beam (12), and with a cutting knife (3), both the laser beam (12) and the cutting knife (3) acting at a distance from one another, in the cutting direction, on the substrate (4, 5) which is to be cut, and the laser (11) and the cutting knife (3) being arranged in such a way that in the direction of movement (10) of the sheet (1) forming the substrate the cutting knife (3) is arranged after the site of action (16) of the laser beam (12), **characterized in that** the laser (11) and the cutting knife (3) are designed so that the laser beam (12) generates, in the decorative layer (5), a removal track (13) which is wider than the thickness (d) of the cutting edge of the cutting knife (3) acting on the sheet (1).

10. Device according to Claim 9, **characterized in that** the laser (11) is provided with a means for deflecting the laser beam (12).

11. Device according to Claim 9 or 10, **characterized in that** the laser (11) has a means for changing the diameter of the laser beam (12) acting on the sheet (1).

12. Device according to one of Claims 9 to 11, **characterized in that** the power of the laser (11) can be controlled as a function of the speed of movement of the sheet (1).

13. Device according to one of Claims 9 to 12, **characterized in that** the distance between the sites of action (16) of the laser beam (12) and of the cutting knife (3) on the sheet (1) is less than 70 mm, preferably less than 50 mm.

14. Device according to one of Claims 9 to 13, **characterized in that** the laser beam (12) and the cutting knife (3) are arranged on the same side of the sheet (1) which is to be cut.

## Revendications

1. Procédé pour le découpage de feuilles, en particulier des feuilles à marquer, constituées par un film support et une couche décorative se trouvant sur celui-ci, présentant au moins une couche de vernis, **caractérisé en ce que**, au moyen d'un rayon laser (12), la couche décorative (5) est d'abord séparée le long d'une ligne de coupe (13) du film support (4) et que dans la ligne de séparation ainsi formée (13), le film support est sectionné mécaniquement au moyen d'une lame (3).

2. Procédé selon la revendication 1, **caractérisé en ce qu'**une ligne de séparation (13) est formée, dont la largeur (b) est supérieure à l'épaisseur (d) de la lame (3) coupant le film support (4).

3. Procédé selon la revendication 1 ou 2, **caractérisé en ce qu'**une ligne de séparation (13) de 1 à 2 mm de largeur est formée.

4. Procédé selon l'une quelconque des revendications précédentes, **caractérisé en ce qu'**un laser YAG Nd ou un laser à diode (11) est utilisé pour fendre la couche décorative (5).

5. Procédé selon la revendication 4, **caractérisé en ce qu'**un laser (11) d'une puissance allant de 20 à 50 W est utilisé.

6. Procédé selon l'une quelconque des revendications précédentes, **caractérisé en ce qu'**un laser (11) comportant une répartition des intensités du rayonnement laser (12) perpendiculairement au sens d'avancement de la feuille par rapport au rayon laser (12), correspondant à un profil rectangulaire (figure 3) est utilisé.

7. Procédé selon l'une quelconque des revendications précédentes, **caractérisé en ce que** le film support (4) est sectionné à la suite de la section de la couche décorative (5) à intervalle inférieur à 70 mm, de préférence inférieur à 50 mm, au moyen de la lame (3).

8. Procédé selon l'une quelconque des revendications précédentes, **caractérisé en ce que** l'opération est réalisée à des vitesses de coupe d'au moins 40 m/min, de préférence d'au moins 70 m/min.

9. Dispositif pour la réalisation du procédé de découpage selon l'une quelconque des revendications précédentes, comprenant un laser (11) produisant un rayon de séparation (12), et une lame (3), le rayon laser (12) et la lame (3) agissant de conserve à intervalle dans le sens de coupe sur le substrat à découper (4, 5), le laser (11) et la lame (3) étant disposés de telle sorte que la lame (3) soit placée ensuite sur le site d'action (16) du rayon laser (12) dans le sens de déplacement (10) de la feuille formant le substrat (1), **caractérisé en ce que** le laser (11) et la lame (3) sont agencés de façon à ce que le rayon laser (12) produise une ligne de séparation (13) dans la couche décorative (5) qui soit plus large que l'épaisseur (d) de l'arête de la lame (3) opérant sur la feuille (1).

10. Dispositif selon la revendication 9, **caractérisé en ce que** le laser (11) est équipé d'un dispositif de déviation du rayon laser (12).

11. Dispositif selon la revendication 9 ou 10, **caractérisé en ce que** le laser (11) comporte un dispositif servant à modifier le diamètre du rayon laser (12) agissant sur la feuille.

12. Dispositif selon l'une quelconque des revendications 9 à 11, **caractérisé en ce que** la puissance du laser (11) est réglable en fonction de la vitesse de déplacement de la feuille (1).

13. Dispositif selon l'une quelconque des revendications 9 à 12, **caractérisé en ce que** l'intervalle entre le site d'action (16) du rayon laser (12) d'une part, et de la lame (3) d'autre part, est inférieur à 70 mm, de préférence inférieur à 50 mm sur la feuille (1).

14. Dispositif selon l'une quelconque des revendications 9 à 13, **caractérisé en ce que** le rayon laser (12) et la lame (3) sont disposés sur le même côté de la feuille à découper (1).
